# EUROPÄISCHE PATENTANMELDUNG

(11) **EP 1 637 464 A1**
(43) Veröffentlichungstag der Anmeldung: **22.03.2006**
(21) Anmeldenummer: 04022203.6
(22) Anmeldetag: 17.09.2004
(51) Int. Cl.: B65D 19/38, B60P 1/44

(54) **Stapelbare Transport- und Montagepalette für Hubladebühnen**

(71) Anmelder: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(57) **Zusammenfassung**

Eine stapelbare Transport- und Montagepalette (P) für Hubladebühnen oder deren Hubwerke, welche ein quer verlaufendes Tragrohr (17) mit zwei daran schwenkbar gelagerten, längs verlaufenden Tragarmen (19) aufweisen, umfasst:
- eine nach vorne offene Gabelzinken-Längsaufnahme, insbesondere zwei nach vorne offene parallele Gabelzinken-Längskanäle (9),
- eine hinten vorgesehene Tragrohrauflage (5), die dem Tragrohr (17) der Hubladebühne zugeordnet ist,
- mindestens eine Querrohrauflage (11, 12), die einem die Tragarme (19) miteinander verbindenden Querrohr (13, 14) der Hubladebühne zugeordnet ist,
- zwei vordere und zwei hintere hochstehende Distanzstiele (2, 3) als Auflage für die nächste Stapelebene,
wobei die Tragrohrauflage (5) durch zwei in Querrichtung beabstandete, Drehauflager mit jeweils zwei unterschiedlich hohen Auflageflächen (15, 16) gebildet ist, welche vor und hinter den hinteren Distanzstielen (2) vorgesehen und durch Verdrehen des Drehauflagers um 180° gegeneinander vertauschbar sind.

## Beschreibung

Die vorliegende Erfindung betrifft eine stapelbare Transport- und Montagepalette für Hubladebühnen oder deren Hubwerke, welche ein quer verlaufendes Tragrohr mit zwei daran schwenkbar gelagerten, längs verlaufenden Tragarmen aufweisen und am Heck eines Fahrzeugs befestigt werden.

Hubladebühnen aller Ausführungen müssen absolut nach den Belangen des Nutzfahrzeugs konstruiert sein. Dabei hat die Transport- und Lagerökonomie fast völlig untergeordneten Rang. Nur bei unter das Fahrzeug in eine Verstauposition verfahrbaren Hubladebühnen sind das Hubwerk und die Plattform (weil immer gefaltet und eingefahren) komplett montagefertig zusammengebaut. Dieser Bausatz besteht daher nur aus der zusammengebauten Hubladebühne und dem benötigten Montagematerial mit Dokumenten.

Im Gegensatz zu unterfahrbaren Hubladebühnensystemen können Standard-Hubladebühnen wegen ihrer Sperrigkeit nicht komplett zusammengebaut transportiert, gelagert und montiert werden. Daher besteht ein Hubladebühnenbausatz der Standardversion aus einem Hubwerk, einer Plattform und dem Montagematerial mit Dokumenten. Diese beiden Großbaugruppen (Hubwerk und Plattform) werden bei Standard-Hubladebühnen deshalb entweder zusammen oder beim Versand mehrerer gleicher Hubladebühnen getrennt auf jeweils einer Europalette mit zusätzlichen Holzbalken und Distanzhölzern gestapelt und mit stabilen, teuren, nicht wieder verwendbaren Spannbändern verzurrt. Entspricht die vorliegende Transportmenge nicht der möglichen Stapelhöhe, ist in der Regel der darüber liegende Raum vergeudet. Auf jeden Fall wird bei dieser Transportart eine aufwändige, zusätzliche, mehrfache Verzurrung auf dem Lkw notwendig, da die Transportstapel eine schlechte Standsicherheit haben und instabil sein können. Das Montagematerial, die Dokumentenmappe mit Betriebsanleitung, Prüfbuch, Konformitätserklärung, Zulassungen und ABE-Bescheinigungen, Montageanleitungen, Ersatzteilkataloge etc. müssen in jedem Fall in einem separaten Behältnis, vorzugsweise in Montagekartons verpackt, auf Europaletten transportiert werden. Beim Empfänger werden in der Regel die Baugruppen (Hubwerk und Plattform) oder die komplett montierte unterfahrbare Hubladebühne aus Kostengründen im Freien gelagert. Das Montagematerial in den Kartons hingegen muss aus Witterungs- und Diebstahlgründen im Warenannahmelager entgegengenommen, eingelagert und verwaltet werden. Bei der Montage wird mit dem Gabelstapler das benötigte Hubladebühnen-Hubwerk oder die komplette unterfahrbare Hubladebühne vom Lagerplatz zum Montageplatz gebracht. Wird jetzt die wegen der besseren Transportökonomie oder aus anderen Gründen unten gelagerte Hubladebühne zuerst benötigt, muss vorher der darauf liegende Stapel vereinzelt werden. Dies ist aufwändig, und es besteht die Gefahr, dass die Hubwerke oder kompletten Hubladebühnen durch Verrutschen oder Platzmangel beschädigt werden. Auch ist das Wiederstapeln der nicht gebrauchten Hubladebühnen-Hubwerke zeit- und kostenaufwändig. Das für diese Hubladebühne bestimmte Montagematerial muss zusätzlich ausgelagert und an den Montageplatz gebracht werden. Geschehen dabei Verwechslungen, was üblich ist und meist zu spät bemerkt wird, hat der Montagebetrieb "zerfledderte" Montagekartons mit dem Ergebnis, dass sich der Monteur aus mehreren Montagekartons bedient und bei der letzten Montage Teile fehlen, die dann beim Hubladebühnen-Hersteller als nicht geliefert reklamiert werden. Da es in der Regel mehrere Montageplätze gibt und in solchen Bereichen auch Schicht gearbeitet wird, wird das Ganze noch dadurch verkompliziert, dass sogar zwei oder mehrere Personen hintereinander an derselben Montage arbeiten. Bei Standard-Hubwerken muss zusätzlich das Hubwerk mittels eines Krans o. ä. von der Transport-Europalette abgenommen und mit weiteren Hilfsmitteln an das Fahrzeug montiert werden. Die Montage dieser Hubwerke auf der Palette liegend und unter das Fahrzeug positioniert ist nicht möglich, weil die Gefahr des Abrutschens viel zu groß ist.

Bisher ist somit eine unnötig aufwändige Verpackung notwendig, deren Verpackungsmaterial entsorgt werden muss. Die Beladedichte im Transportraum ist gering, d.h., die Tragfähigkeit des Nutzfahrzeugs ist schlecht ausgenutzt, der Verzurrungsaufwand ist hoch, trotzdem sind Transportschäden häufig, und ein Umladen (Transportkette Nahverkehr/Fernverkehr) ist so gut wie ausgeschlossen. Beim Kunden ist die Lagerung, die Zusammenführung der Teile aufwändig, teuer und fehlerbehaftet. Bei der Montage der Standard-Hubwerke an das Fahrzeug wird dieses häufig durch das Abnehmen von der Europalette unnötigerweise zerkratzt.

Demgegenüber ist es die Aufgabe der vorliegenden Erfindung, eine stapelbare Transport- und Montagepalette bereitzustellen, die für möglichst viele unterschiedliche Hubladebühnentypen eingesetzt und wieder verwendet werden kann.

Diese Aufgabe wird erfindungsgemäß durch eine Transport- und Montagepalette mit den Merkmalen des Patentanspruchs 1 gelöst. Weitere vorteilhafte Ausgestaltungen des Gegenstands der Erfindung sind den Unteransprüchen entnehmbar.

Die erfindungsgemäße Transport- und Montagepalette ist für alle Arten von Hubladebühnen geeignet, was durch die Variabilität bei der Positionierung der Hubwerke erreicht wird. Das Tragrohr der Hubladebühne kann sowohl vor oder hinter den hinteren Distanzstielen sowie auf zwei unterschiedlich hohen Auflageflächen transportiert werden. Das Montagematerial kann verpackungslos, zugeordnet der jeweiligen Hubladebühne, bis zum Montageort befördert werden. Es spielt dabei keine Rolle, wie oft die Transport- und Montagepalette transportiert und umgelagert wird. Das Montagematerial steht dem Monteur im entscheidenden Augenblick automatisch zur Verfügung. Die gesamte Organisation für das Montagematerial entfällt sowohl beim Hubladebühnen-Hersteller als auch bei der Transportfirma und erst recht bei dem Montagebetrieb. Hubwerke von Standard-Hubladebühnen werden von der Produktion über den Transport bis zur Befestigung am Fahrzeug nicht mehr bewegt. Dadurch können selbst lackierte Hubwerke beschädigungsfrei vom Hubladebühnen-Hersteller bis an das Fahrzeug gelangen. Die Montage selbst erfolgt auch viel sicherer, da das Hubwerk oder die komplette Hubladebühne sicher fixiert auf der Transport- und Montagepalette liegt. Erst wenn es mit Aufhängeplatten am Fahrzeug verschraubt ist, wird die Transport- und Montagepalette abgelassen. Dadurch ist eine sichere und schnelle Montage, auch durch nur eine Person möglich. Die Transportdichte auf dem Lkw wird durch die Ausnutzung der maximalen Höhe bei gemischtem Transport, d.h. von unterschiedlichen Hubladebühnentypen, um 30 - 50 % erhöht. Der Verzurraufwand auf dem Lkw ist minimal. Die Standsicherheit des verzurrten Stapels ist durch metallischen Formschluss übereinander liegender Transport- und Montagepaletten viel sicherer als das Aufeinanderstapeln mit mehreren Paletten und Holzbalken. Die Verzurrung kann sich durch Nachgeben der Holzmaterialien nicht lösen. Für den Rücktransport von leeren Transport- und Montagepaletten wird der Laderaum maximal ausgenutzt, da für einen Palettenstapel nur die Grundfläche einer Europalette gebraucht wird. Bei normaler Ladehöhe können in einem Stapel somit 10 - 12 Transportgestelle rücktransportiert werden. Muss ein Palettenstapel umgeladen oder umgeschichtet werden, kann dies schnell und sicher erfolgen. Die Wiederstapelung ist genauso sicher wie die werkseitige Stapelung. Der gesamte Versand der Hubladebühnen-Bausätze kann vollständig verpackungslos erfolgen, d.h., es fällt bis auf die Kanthölzer, die nur bei den entsprechenden unterfahrbaren Hubladebühnen gebraucht werden, keinerlei Verpackungsabfall an. Selbst die Kanthölzer können bei entsprechender Menge zurücktransportiert und wieder verwendet werden. Hier entfallen nicht nur Kosten, sondern es wird auch die Umwelt geschont. Auch im Herstellerwerk ist das Richten sowie der Versand mit der erfindungsgemäßen Transport- und Montagepalette je nach Hubladebühnenausführung 30 - 50 % wirtschaftlicher zu gestalten.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

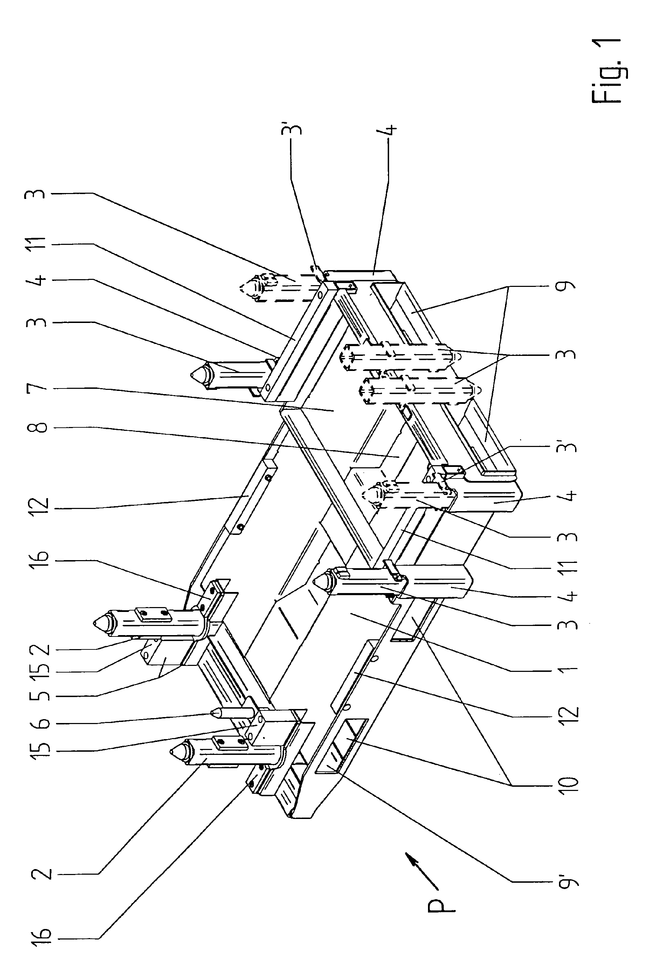

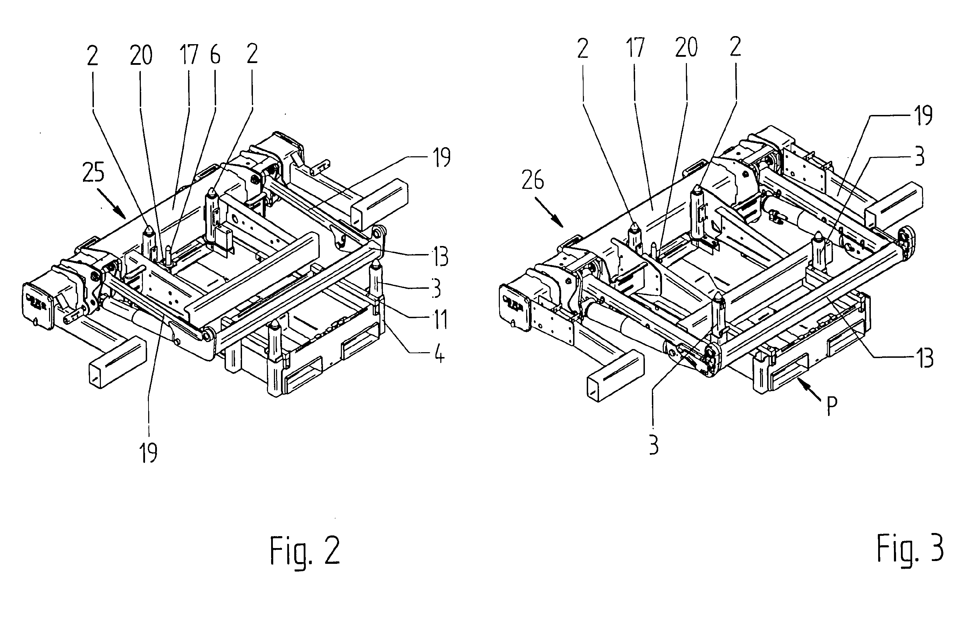

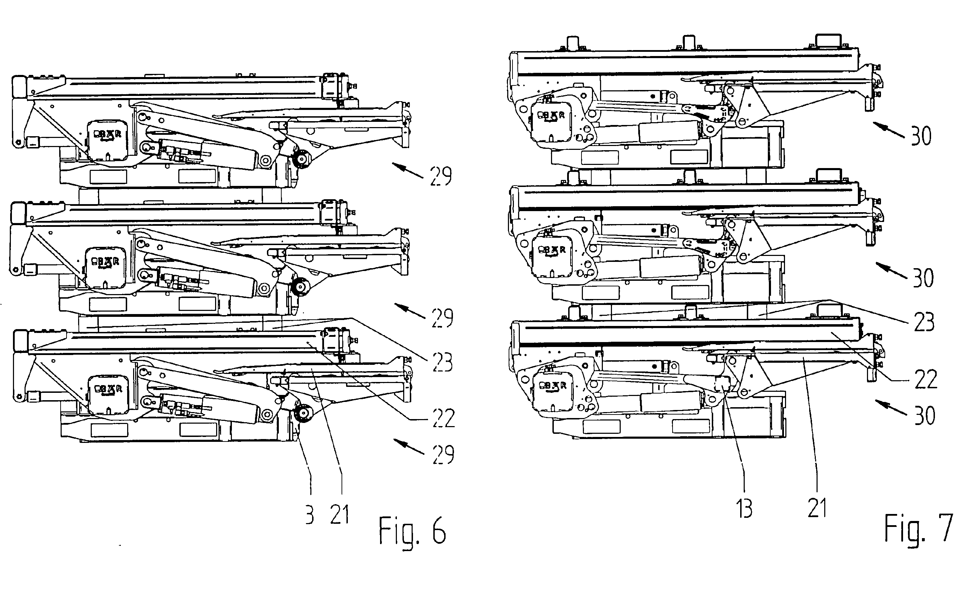

Die in **Fig. 1** gezeigte eine leere stapelbare Transport- und Montagepalette **P** für Hubladebühnen weist einen Palettenkörper **1** mit zwei nach vorne offenen parallelen Gabelzinken-Längskanälen **9,** einer hinten vorgesehenen Tragrohrauflage **5,** zwei in Längsrichtung beabstandete Querrohrauflagen **11, 12** aus Kunststoff, zwei vordere und zwei hintere hochstehende Distanzstiele 2, 3 als Auflage für die nächste Stapelebene auf. Die hintere Querrohrauflage 12 befindet sich auf einem tieferen Niveau als die vordere Querauflage 11, wobei beide Querrohrauflage 11, 12 jeweils durch zwei seitliche Auflageflächen gebildet sind. Die hinteren Distanzstiele 2 sind fest mit dem Palettenkörper 1 verbunden und verleihen so dem Palettenstapel eine bessere Stabilität. In jedem Fall liegt das Tragrohr **17** der zu transportierenden Hubladebühne an diesen festen Distanzstiele 2 an. Entweder liegt das Tragrohr 17 dahinter, wie die Fign. 2, 3, 4, 5 und 7 zeigen, oder davor, wie in der Fig. 6 dargestellt. Die vorderen Distanzstiele 3 sind im Bereich der vorderen Querrohrauflage 11 wahlweise entweder in hintere Aufnahmetaschen **4,** wie in Fig. 1 gezeigt, oder in vordere Aufnahmetaschen **4,** wie in Fig. 1 gestrichelt angedeutet, einsteckbar, um zwei unterschiedlichen Längspositionen zu ermöglichen. Die Frage, in welche Aufnahmetaschen die Distanzstiele 3 eingesteckt werden, hängt von dem zu transportierenden Hubwerk ab. Bei Hubladebühnen mit einer Hubschwinge, d.h. mit einem die Tragarme **19** verbindenden Torsionsrohr **13,** liegt dieses immer auf der hinteren Querrohrauflage 11. Aufgrund unterschiedlicher Armlängen ist daher die Notwendigkeit gegeben, dem Torsionsrohr 13 der Hubschwinge auszuweichen.

Wie in Fig. 1 ebenfalls gestrichelt dargestellt, können die vorderen Distanzstiele 3 alternativ auf dem Kopf stehend am Palettenkörper 1 befestigt werden, um die Plattform von unterfahrbaren Hubladebühnen, die - wie in **Fig. 6** dargestellt - keine Hubschwinge haben, abzustützen. Zur Positionierung in dieser Anwendung haben die Distanzstiele 3 den Anschlagwinkel 3'. Dieser Anschlagwinkel bildet zusammen mit dem gegenüber angeschweißten Anschlag die Höhenpositionierung, wenn die beweglichen Distanzstiele 3 in den Aufnahmetaschen 4 benutzt werden. Im Falle der Benutzung kopfstehend wird der Anschlagwinkel 3' an der vorderen Wand des Teileraums 7 eingehängt.

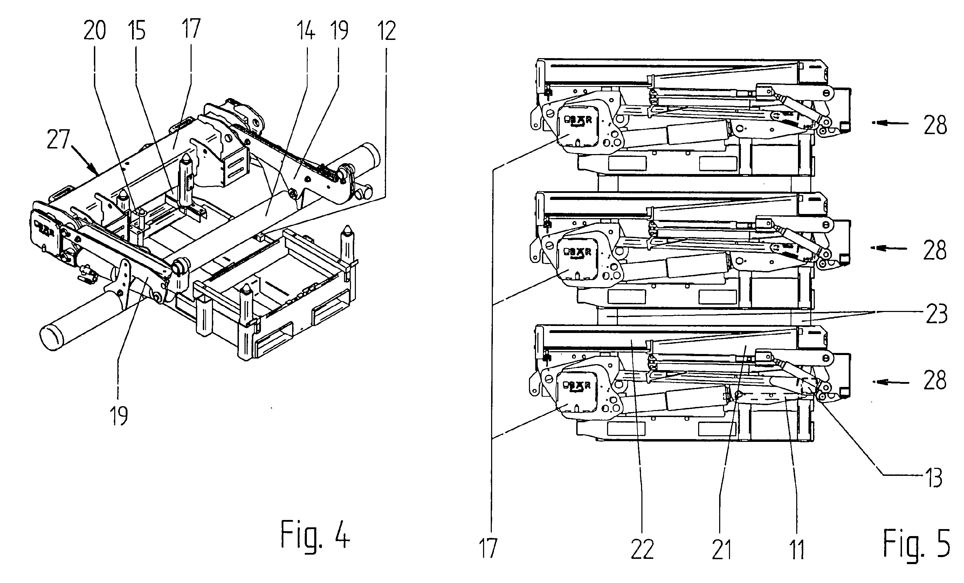

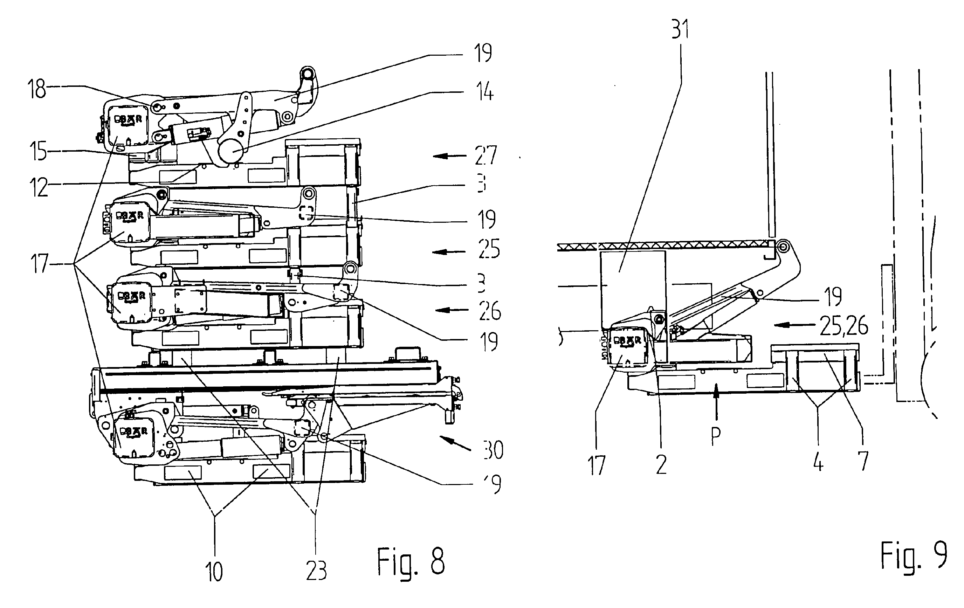

Damit die Stapelhöhe der einzelnen Transport- und Montagepalette P niedrig bleiben kann, ist es notwendig, dass die Tragrohrauflage 5 wahlweise mit zwei unterschiedlich hohen Auflageflächen gewählt werden kann. Dazu ist die Tragrohrauflage 5 durch zwei in Querrichtung beabstandete Drehauflager mit jeweils zwei unterschiedlich hohen Auflageflächen **15, 16** gebildet, welche vor und hinter den hinteren Distanzstielen 2 vorgesehen und durch Verdrehen des Drehauflagers um 180° um die festen Distanzstiele 2 gegeneinander vertauschbar sind. Diese beiden Auflageflächen 15, 16 bilden die variable Tragrohrauflage 5, deren beide Drehauflager jeweils um 180° gedreht und arretiert werden können. Es kann also eine niedere und eine hohe Auflageposition durch 180°-Drehung gewählt werden. In Fig. 1 sind nur zur Verdeutlichung die beiden Drehauflager vorne mit unterschiedlich hohen Auflageflächen gezeigt. Die niedere Auflagefläche 16 wird bei den Benutzungsfällen nach Fign. 2, 3, 5, 6 und 7 benötigt. In Fig. 4 wird die hohe Auflagefläche 15 benötigt. Weshalb dies so ist, zeigt Fig. 8. Die oberste Hubladebühne entspricht der in Fig. 4. Diese Hubladebühne hat einen beweglichen Unterfahrschutz **14,** der auf der hinteren Querrohrauflage 12 aufliegt. Durch die hohe Auflagefläche 15 können die Tragarme **19,** die im Drehpunkt **18** mit dem Tragrohr 17 verbunden sind, eine platzsparende, fast waagrechte Stellung einnehmen.

Der Palettenkörper 1 besteht im Wesentlichen aus den beiden nach hinten offenen Gabelzinken-Längskanälen 9, die nicht durchgehend sind, sondern an ihrem inneren Ende mit dem Anschlag 9' eine geschlossene Wand haben. Daher kann die Transport- und Montagepalette P in der Richtung der Gabelzinken-Längskanäle 9 nur in einer Richtung aufgenommen werden. Die beiden Gabelzinken-Querkanäle **10** hingegen durchdringen den ganzen Palettenkörper 1, so dass die Transport- und Montagepalette P beidseitig mit den Gabelzinken aufgenommen werden kann. Die Gabelzinken-Längskanäle und -Querkanäle 9, 10 haben einen geschlossenen rechteckförmigen Querschnitt.

Am vorderen Ende des Palettenkörpers 1, genauer gesagt zwischen den beiden seitlichen Auflageflächen der vordern Querrohrauflage 11, befindet sich der nach oben offene, allseitig umgrenzte Teileraum 7 mit der zusätzlichen Vertiefung 8. Dort werden die vorderen Distanzstiele 3 gelagert, wenn diese beim Hubladebühnentransport, die in den Fällen nach Fign. 5 und 7 nicht gebraucht werden, verstaut werden können. Die vorderen Distanzstiele 3 sind mit nicht dargestellten Ketten unverlierbar mit dem Palettenkörper 1 verbunden. Der Teileraum 7 ist so gewählt, dass die am Fahrzeug zu befestigenden Aufhängeplatten **31** (Fig. 9) der Hubladebühnen als größtes Montageteil Platz finden. Im Teileraum 7 finden aber auch Schrauben, Splinte, Kleinteile, elektrische Teile, Kabel und die Dokumentenmappe Platz. Die in der Mitte des Palettenkörpers 1 nicht näher bezeichnete Vertiefung ist aus Stabilitätsgründen so gewählt und stellt einen zusätzlichen Transportraum dar. Dies gilt auch für den gesamten Raum zwischen Teileraum 7 und den festen Distanzstielen 2.

Zwischen den festen Distanzstielen 2 befindet sich der Zentrierdorn **6,** der durch ein entsprechendes Gegenstück am Tragrohr 17 in Verbindung mit den festen Distanzstielen 2 das Hubwerk oder die gesamte Hubladebühne in allen Richtungen fixiert. Die Höhe des Zentrierdorns 6 ist so gewählt, dass sowohl bei der hohen als auch bei der niedrigen Lage des Tragrohrs 17 die Zentrierung gegeben ist.

**Fig. 2** zeigt ein Standard 4-Zylinder-Hubwerk **25** einer Hubladebühne. Das Tragrohr 17 liegt hinter den festen Distanzstielen 2 auf den nicht sichtbaren niedrigen Tragrohrauflagen 16, das Torsionsrohr 13 auf der vorderen Querrohrauflage 11. Das Tragrohr 17 hat zur allseitigen Zentrierung die Zentrieröse **20,** welche in den Zentrierdorn 6 des Palettenkörpers 1 eingegriffen hat. Die vorderen Distanzstiele 3 sind in diesem Transportfall in den vorderen Aufnahmetaschen 4 positioniert.

Die in **Fig. 3** gezeigte Standard 4-Zylinder-Hubwerk **26** hat eine höhere Tragfähigkeit als das Hubwerk der Fig. 2 und in der Regel auch längere Tragarme 19. Hier kann es notwendig sein, die vorderen Distanzstiele 3, wie gezeigt, in den hinteren Aufnahmetaschen 4 zu positionieren.

**Fig. 4** zeigt im Gegensatz zu den Fign. 2 und 3 ein 2-Zylinder-Standard-Hubwerk **27** mit einem an den Tragarmen 19 befestigten Unterfahrschutz **14.** Wie oben erwähnt, ist das Tragrohr 17 auf den hohen Auflageflächen 15 der Tragrohrauflage 5 gelagert. Der Unterfahrschutz 14 liegt auf der hinteren Querrohrauflage 12 auf.

**Fig. 5** zeigt des besseren Verständnisses wegen eine Seitenansicht einer zweimal gefalteten unterfahrbaren Hubladebühne **28** eingefahren in Verstauposition. Das Hubwerk selbst entspricht in etwa dem der Fig. 3. Es ist entsprechend auf dem Palettenkörper 1 gelagert. Bereits zusammenmontiert und gefaltet befindet sich über dem Torsionsrohr 13 der Hubschwinge die zweimal gefaltete Plattform **21.** Darüber befindet sich das Führungswerk **22,** das bei der Montage am Fahrzeug fest mit dessen Rahmen verschraubt wird und in dem das Hubwerk von der Verstauposition unter dem Fahrzeug in die Arbeitsposition verfahrbar ist. Wie Fig. 5 zeigt, ist die oberste Kante einer solchen unterfahrbaren Hubladebühne 28 das Führungswerk 22. Soll jetzt über dieser Hubladebühne eine weitere Stapelung erfolgen, sind zwei Kanthölzer **23** notwendig, da die beiden (zweite nicht sichtbar) Führungsschienen des Führungswerks 22 ca. 1000 mm auseinander liegen, während der Palettenkörper 1 nur eine maximale Breite von 800 mm hat. Fig. 5 zeigt das Aufeinanderstapeln von drei gleichen unterfahrbaren Hubladebühnen 28.

**Fig. 6** zeigt ebenfalls die Seitenansicht eines Dreifachstapels einer unterfahrbaren, nur einmal gefalteten Hubladebühne **29** nach dem 2-Zylinder-Prinzip (ähnlich Fig. 4). Hier fehlt das Torsionsrohr der Hubschwinge, daher sind zusätzlich die auf dem Kopf stehenden beweglichen Distanzstiele 3 notwendig, welche die Plattform 21 abstützen. Zwei Kanthölzer 23, die auf den Führungsschienen des Führungswerks 22 aufliegen, definieren die nächste Stapelebene.

**Fig. 7** zeigt eine weitere unterfahrbare Hubladebühne 30 mit einmal gefalteter Plattform 21 und mit einem Hubwerk ähnlich Fig. 3. Entsprechend ist das Hubwerk auf dem Palettenkörper 1 gelagert. Auch hier definieren zwei Kanthölzer 23, die auf den Führungsschienen des Führungswerks 22 aufliegen, die nächste Stapelebene.

**Fig. 8** zeigt den gemischten Transport einer unterfahrbaren, einmal gefalteten Hubladebühne 30 nach Fig. 7, darüber ist mittels der Kanthölzer 23 ein Standard-Hubwerk 26 nach Fig. 3 gelagert. Die beweglichen Distanzstiele 3 sind hier innen positioniert. Weiter darüber ist ein Standard-Hubwerk 25 nach Fig. 2 gelagert. Hier müssen die Distanzstiele 3 außen positioniert sein. Als oberstes ist eine Standard-Hubladebühne 27 mit der 2-Zylinder-Technik nach Fig. 4 gelagert. Fig. 8 zeigt, dass bei dieser gemischten Verladeweise vier Hubladebühnen/Hubladebühnen-Hubwerke transportiert werden können, in den Fign. 5, 6 und 7 hingegen nur drei. Werden, wie nicht dargestellt, nur Hubwerke transportiert, sind fünf Hubwerke übereinander möglich.

**Fig. 9** zeigt die Montage des auf der Transport- und Montagepalette P befindlichen Standard 4-Zylinder-Hubwerks 25 oder 26 am Fahrzeug. Die Transport- und Montagepalette P wird vom gestrichelt dargestellten Gabelstapler gehalten. Hier ist sichtbar, dass in dieser Position der Teileraum 7 frei wird zur Entnahme des Montagematerials. Zum besseren Arbeiten sind die beweglichen Distanzstiele 3 entfernt. Die festen Distanzstiele 2 können in den nicht näher bezeichneten Fahrgestellrahmen des Lkws eindringen. Daher darf der äußere Abstand nur 500 mm betragen. Nach Befestigung des Hubwerks am Fahrzeug kann die Transport- und Montagepalette P abgelassen und für den Rücktransport bereitgestellt werden.

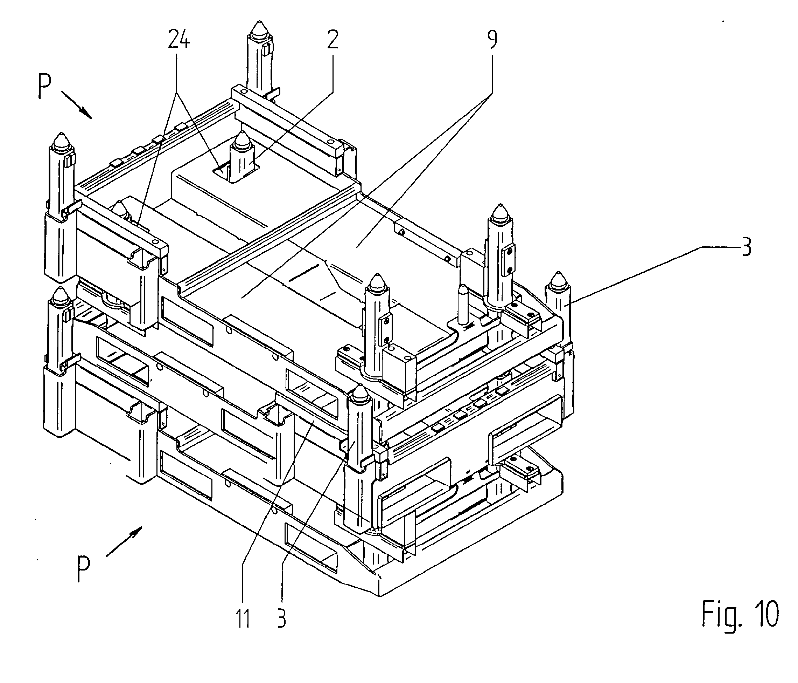

**Fig.** 10 zeigt zwei nach jeweiliger horizontaler 180°-Drehung ineinander gestapelte Transport- und Montagepaletten P. Die untere Transport- und Montagepalette P durchdringt hierbei mit seinen festen Distanzstielen 2 durch die oben- und untenseitige Ausnehmung **24** der beiden Gabelzinken-Längskanäle 9 der oberen Transport- und Montagepalette P. Die obere Palette 9 liegt mit ihren Gabelzinken-Längskanälen 9 auf der unteren Palette P auf, und zwar einerseits auf den hohen Auflageflächen 15 der Tragrohrauflage 5 und andererseits auf der vorderen Querrohrauflage 11. Die Ausnehmung 24 ist so gewählt, dass die festen Distanzstiele 2 darin nur minimal Luft haben. Die festen Distanzstiele 2 der unteren Palette P fixieren durch die Gestaltung der Ausnehmung 24 die obere Palette P in alle Richtungen. Die Fixierung in Querrichtung übernehmen die beiden beweglichen Distanzstiele 3 zusätzlich.

Die Transport- und Montagepalette P ist mit Ausnahme ihrer Kunststoff-Auflageflächen 11, 12 15, 16 aus Metall. Die hinteren Distanzstiele 2 haben in Querrichtung einen Außenabstand von maximal 500 mm und die vorderen Distanzstiele 3 in den Aufnahmetaschen 4 einen Außenabstand von maximal 800 mm, wobei die Transport- und Montagepalette P vorzugsweise die Grundabmessungen einer Europalette mit dem Maß 1200 x 800 hat.

## Patentansprüche

1. Stapelbare Transport- und Montagepalette (P) für Hubladebühnen (28; 29; 30) oder deren Hubwerke (25; 26; 27), welche ein quer verlaufendes Tragrohr (17) mit zwei daran schwenkbar gelagerten, längs verlaufenden Tragarmen (19) aufweisen, umfassend:
- eine nach vorne offene Gabelzinken-Längsaufnahme, insbesondere zwei nach vorne offene parallele Gabelzinken-Längskanäle (9),
- eine hinten vorgesehene Tragrohrauflage (5), die dem Tragrohr (17) der Hubladebühne zugeordnet ist,
- mindestens eine Querrohrauflage (11, 12), die einem die Tragarme (19) miteinander verbindenden Querrohr (13, 14) der Hubladebühne zugeordnet ist,
- zwei vordere und zwei hintere hochstehende Distanzstiele (2, 3) als Auflage für die nächste Stapelebene,
wobei die Tragrohrauflage (5) durch zwei in Querrichtung beabstandete, Drehauflager mit jeweils zwei unterschiedlich hohen Auflageflächen (15, 16) gebildet ist, welche vor und hinter den hinteren Distanzstielen (2) vorgesehen und durch Verdrehen des Drehauflagers um 180° gegeneinander vertauschbar sind.

2. Transport- und Montagepalette nach Anspruch 1, **dadurch gekennzeichnet, dass** zwei in Längsrichtung beabstandete Querrohrauflagen (11, 12) vorgesehen sind, die Hubladebühnen mit jeweils unterschiedlich weit vom Tragrohr (17) beabstandeten Querrohren (13, 14) zugeordnet sind.

3. Transport- und Montagepalette nach Anspruch 2, **dadurch gekennzeichnet, dass** sich die hintere Querrohrauflage (12) auf einem tieferen Niveau als die vordere Querauflage (11) befindet.

4. Transport- und Montagepalette nach Anspruch 2 oder 3, **dadurch gekennzeichnet, dass** die vorderen Distanzstiele (3) im Bereich der vorderen Querrohrauflage (11) wahlweise in zwei unterschiedlichen Längspositionen befestigbar sind.

5. Transport- und Montagepalette nach einem der Ansprüche 2 bis 4, **dadurch gekennzeichnet, dass** die vordere Querrohrauflage (11) durch zwei seitliche Auflageflächen gebildet ist und dazwischen ein nach oben offener, insbesondere allseitig umgrenzter Teileraum (7) für Klein- und Montageteile sowie Dokumente vorgesehen ist.

6. Transport- und Montagepalette nach einem der vorhergehenden Ansprüche, **dadurch gekennzeichnet, dass** eine Zentriereinrichtung zum Zentrieren und Fixieren der Hubladebühne (25) auf der Transport- und Montagepalette (P), insbesondere ein mit dem Tragrohr (17) der Hubladebühne (25) zusammenwirkender Zentrierdorn (6), vorgesehen ist.

7. Transport- und Montagepalette nach einem der vorhergehenden Ansprüche, **dadurch gekennzeichnet, dass** die beiden hinteren Distanzstiele (2) fest mit einem Palettenkörper (1) verbunden sind und insbesondere die Drehachsen der Drehauflager (15) definieren.

8. Transport- und Montagepalette nach einem der vorhergehenden Ansprüche, **dadurch gekennzeichnet, dass** die vorderen Distanzstiele (3) alternativ am Palettenkörper (1) als Auflager für ein gefaltetes Plattformpaket (21) einer unterfahrbaren Hubladebühne (29) befestigbar sind.

9. Transport- und Montagepalette nach einem der vorhergehenden Ansprüche, **dadurch gekennzeichnet, dass** eine Gabelzinken-Queraufnahme, insbesondere zwei Gabelzinken-Querkanäle (10), vorgesehen sind.

10. Transport- und Montagepalette nach einem der vorhergehenden Ansprüche, **dadurch gekennzeichnet, dass** leere Transport- und Montagepaletten (P) jeweils nach horizontaler 180°-Drehung ineinander stapelbar sind.

11. Transport- und Montagepalette nach Anspruch 10, **dadurch gekennzeichnet, dass** die Gabelzinken-Längsaufnahme, insbesondere die beiden Gabelzinken-Längskanäle (9), Ausnehmungen (24) aufweisen, durch welche beim jeweils 180° verdrehten Stapeln von leeren Transport- und Montagepaletten (P) die hinteren Distanzstiele (2) der unten liegenden Transport- und Montagepalette (P) die oben liegende Transport- und Montagepalette (P) durchdringen und diese zentrieren.
